# EUROPEAN PATENT SPECIFICATION

(11) **EP 1 280 285 B1**
(45) Date of publication and mention of the grant of the patent: **13.04.2005**
(21) Application number: 02250806.3
(22) Date of filing: 06.02.2002
(51) Int. Cl.: H04B 7/04, H04Q 7/36

(54) **System and method for beam on demand**
System und Verfahren für Funkstrahlbündel nach Bedarf
Système et méthode pour faisceaux à la demande

(30) Priority: 26.07.2001 US 916083
(43) Date of publication of application: 29.01.2003
(73) Proprietor: LUCENT TECHNOLOGIES INC., Murray Hill, New Jersey 07974-0636 (US)
(72) Inventor: Gerogiokas, Marios, Sparta, New Jersey 07871 (US); Levitine, Vladimir, Mountainside, New Jersey 07092 (US); Niknam, Manouchehr, Sparta, New Jersey 07871 (US); Walk, Ralph, Madison, New Jersey 07940 (US)
(74) Representative: Buckley, Christopher Simon Thirsk

(56) References cited:
- WO-A-00/48272
- WO-A-01/15477
- US-A- 5 771 017

## Description

### Background of the Invention

### Field of the Invention

The present invention is generally related to communication systems and more particularly to an antenna system used in communication systems.

### Description of the Related Art

Communication systems such as wireless systems and other systems have various system equipment that are designed to meet the capacity needs of the system. System equipment such as an antenna system is critical in defining the capacity of many types of communication systems including wireless communication systems. An antenna system typically comprises an antenna array (consisting of antenna elements), power amplifiers, baseband radios and beam formers. The beam formers are devices that process signals from one or more antenna elements to form a composite signal having a certain beam width and direction of propagation. The baseband radios generate the signals that are processed by the beam formers, amplified by the power amplifiers and transmitted (or received) via the antenna array.

Service providers, which are entities that own, operate and control the system equipment, are constantly altering and/or modifying their antenna system to meet the changing capacity needs of their communication system. The capacity of a communication system is the amount of total information that can be properly conveyed in a communication system. Generally, the capacity of a communication system is directly related to the number of subscribers that can properly use the system at any instant of time. Indeed, as more subscribers use a system, more information is conveyed within the system. Service providers often have to deploy additional antenna system equipment to meet increasing capacity needs of their system. The deployment of additional antenna system equipment to meet increasing capacity needs is often disadvantageous because of the vacillation that occurs in the capacity demands. At various times when the capacity demands decrease, the additional deployed equipment is not used and thus become a source of system inefficiency; in such cases, equipment removal or the physical transference of equipment from one point in the system to another point is warranted.

WO-A-01 15477 discloses an antenna sector cell shaping system and method. The system and method dynamically size sectors of a multi-sectored radiation pattern. The system and method employs multiple narrow beams composited to form a radiation pattern. Signals associated with each such narrow beam may be provided to inputs of a scan receiver or signaling radio which inputs are associated with a particular sector of the radiation pattern.

US-A-5 771 017, discloses a base station antenna arrangement having a plurality of antenna arrays. Each antenna array is capable of forming a multiplicity of separate overlapping narrow beams in azimuth, the attays being positioned such that the beams formed by the arrays provide coverage in azimuth wider than each array.

To combat the problem of inefficient equipment usage, system providers employ system operators who allocate (i.e., physically install) the antenna system equipment as they are needed throughout a communication system. However, as the communication system expands, more and more such operators are needed thus increasing the cost of operating the system and also the complexity of keeping track of past equipment deployment increases. Further, very often the capacity demands change at such a fast rate that the deployment or transference or removal of antenna system equipment cannot be done fast enough to sufficiently meet the capacity demands of a communication system. Consequently, system providers have to resort to other techniques to address the issue of inefficient antenna system equipment usage.

One technique used to address the issue of efficient use of system equipment is the application of statistical analysis to meet the capacity demands of a communication system. In many wireless communication systems, the system providers allocate system equipment to various portions of the system based on empirically derived statistical studies of the capacity demands of the communication system. In such wireless communication systems, many of which are divided into cells, the allocation of system equipment is done with the goal of not having to make allocation modifications to the system equipment serving the cells. A cell is a particular defined geographic area that is served by radio equipment and processing equipment of a wireless communication system. Typically, a cell is subdivided into sectors and the allocation of equipment is done on a sector by sector basis. For example, more amplifiers and antennas may be allocated to a certain sector of a cell than other sectors of that same cell because the certain sector has a higher statistical average capacity than the other sectors. Although the statistical technique may improve the efficiency in the usage of the antenna system equipment, there will be many times where the actual capacity demand of the sector will be significantly lower than the statistical average. When the capacity demand is lower than the empirically derived statistical average, the additional deployed equipment become underutilized resulting again in inefficiency. Therefore, in many cases and depending on the particular communication system, the statistical approach may ultimately prove to be relatively inefficient.

What is therefore needed is a system and method for properly allocating antenna system equipment throughout a communication system to meet the varying capacity needs of the system resulting in the efficient usage of such equipment.

### Summary of the Invention

The present invention is a beam on demand system and method for automatically allocating equipment to various portions of a communication system based on the capacity demands of the system. In a preferred embodiment of the system and method of the present invention, the beam on demand system determines the capacity demands of one or more portions of a wireless communication system in terms of the transmission power level of equipment assigned to the portions (e.g., sectors of cells) of a wireless communication system. The capacity demands of various portions of the communication system are met by switching equipment serving one portion to another portion of the communication system. The switching is done such that the portion of the communication system from which the equipment are switched will still be adequately served by the remaining equipment; that is, the remaining equipment will operate at or below a power threshold (or any other type of capacity threshold) established for the affected portion. Also, the equipment to which the switched equipment is added will also operate at or below its threshold. In sum, various equipment can be switched among the various portions of the communication system to prevent any portion from operating beyond its established capacity. For ease of explanation and illustration only, the present invention is described in terms of a cellular wireless communication where the portions of the communication system are portions of a cell called sectors and the switched equipment are amplifiers and antenna elements. It will be readily obvious that the method and system of the present invention is applicable to other types of equipment and other defined portions of a communication system.

### Brief Description of the Drawings

FIG. 1 depicts the beam on demand system of the present invention.
FIG. 2 depicts the assignment of equipment from the system of FIG. 1 to sub-sectors of a cell of a wireless communication system.

### Detailed Description

The present invention is a beam on demand system and method for automatically allocating equipment to various portions of a communication system based on the capacity demands of the system. In a preferred embodiment of the system and method of the present invention, the beam on demand system determines the capacity demands of one or more portions of a wireless communication system in terms of the transmission power level of equipment assigned to the portions (e.g., sectors of cells) of a wireless communication system. The capacity demands of various portions of the communication system are met by switching equipment serving one portion to another portion of the communication system. The switching is done such that the portion of the communication system from which the equipment are switched will still be adequately served by the remaining equipment; that is, the remaining equipment will operate at or below a power threshold (or any other type of capacity threshold) established for the affected portion. Also, the equipment to which the switched equipment is added will also operate at or below its threshold. In sum, various equipment can be switched among the various portions of the communication system to prevent any portion from operating beyond its established capacity. For ease of explanation and illustration only, the present invention is described in terms of a cellular wireless communication where the portions of the communication system are portions of a cell called sectors and the switched equipment are amplifiers and antenna elements. It will be readily obvious that the method and system of the present invention is applicable to other types of equipment and other defined portions of a communication system. It will be further obvious that the capacity demands of the various portions of a communication system can be defined in a variety of forms such as the number of users being served by the various portions or the amount of information being conveyed in the various portions; that is, the representation of capacity demands is not limited to only transmission power levels. The term "couple" refers to a procedure that allows one equipment to transmit signals to another equipment that receives the signals. The term "uncouple" refers to a procedure that prevents equipment (previously coupled) from transmitting and/or receiving signals between each other. The term "switching" refers to a procedure that performs a coupling and an uncoupling operation.

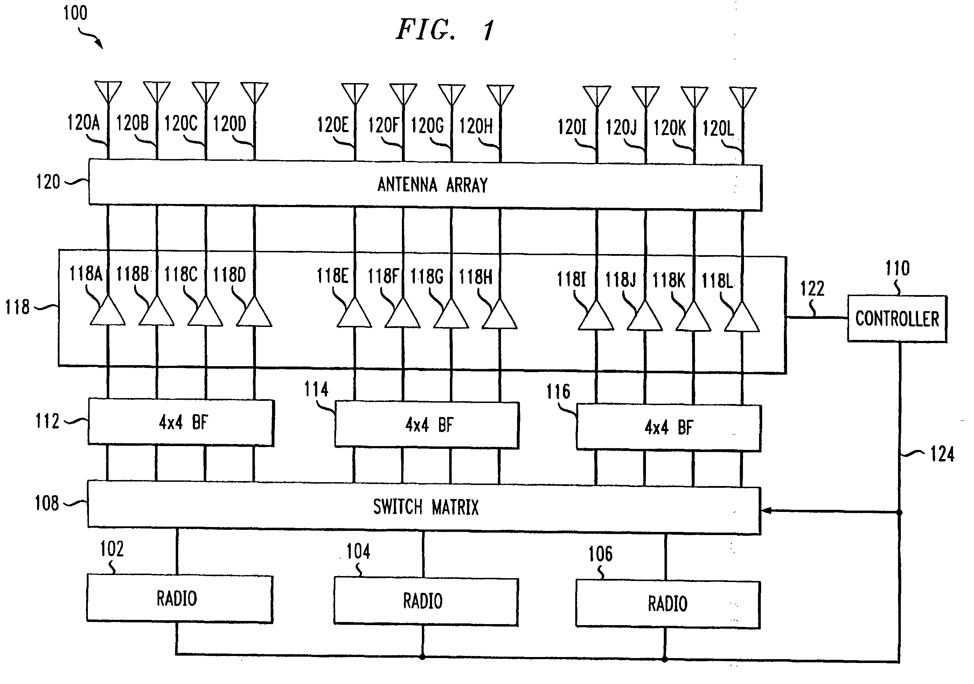

Referring to FIG. 1, there is shown the beam on demand system of the present invention comprising a plurality of amplifiers 118 whose inputs are switchably coupled to radios 102, 104 and 106 via beam formers 112, 114 and 116 respectively and switch matrix 108. Each output of each of the amplifiers is coupled to an antenna element of antenna array 120. The antenna elements and the amplifiers are arranged into three distinct groups where each group has several members. The first group comprises antennas 120A-120D and amplifiers 118A-118D. The second group comprises antenna elements 120E-120H and amplifiers 118E-118H. The third group comprises antenna elements 120I-120L and amplifiers 118I-118L. Radio 102 is assigned to the first group; that is, a signal originating from radio 102 is routed to beam former 112 by switch matrix 108. Beam former 112 processes the signal and applies it to an input of one of the amplifiers belonging to the first group. Radio 104 is assigned to the second group and radio 106 is assigned to the third group. Signals from radios 104 and 106 are similarly routed to the second and third group respectively. It will be readily understood that the beam on demand system of the present invention comprises other type of equipment (e.g., microprocessors, filters, computer hardware) typically used by communication systems and is thus not limited to the equipment shown in FIG. 1. In essence, FIG. 1 depicts equipment provided by a service provider so as to serve various portions (e.g., sectors, sub-sectors of a cell) of a communication system.

Each of the amplifiers in all three groups generates a transmission power level signal received by controller 110 via path 122. Controller 110, which contains power detection circuitry, monitors the transmission power level of one or more groups or monitors the transmission power level of one or more members of the groups. Controller 110 in turn generates a control signal received by switch matrix 108 and the radios via path 124 where such control signal is based on the transmission power level signals received from the equipment groups and on a defined transmission power threshold. The defined transmission power threshold is one type of parameter that corresponds to a capacity threshold that can be established for the various portions of the communication system. The defined transmission power threshold is arbitrarily determined by either a service provider or by the manufacturer of the antenna system. The defined transmission power threshold can correspond to a percentage of the capacity of a group of equipment assigned to a portion of the communication system or a percentage of the capacity of each member of that group. For example a group having a capacity corresponding to 100 watts may have a threshold set at 80 watts such that when the power being transmitted by this group reaches 80 watts, controller 110 will switch one or more members of that group to another group to reduce the capacity demands being experienced by that group. In essence, controller 110 monitors the provided equipment to determine the capacity demands of the various portions of a communication system.

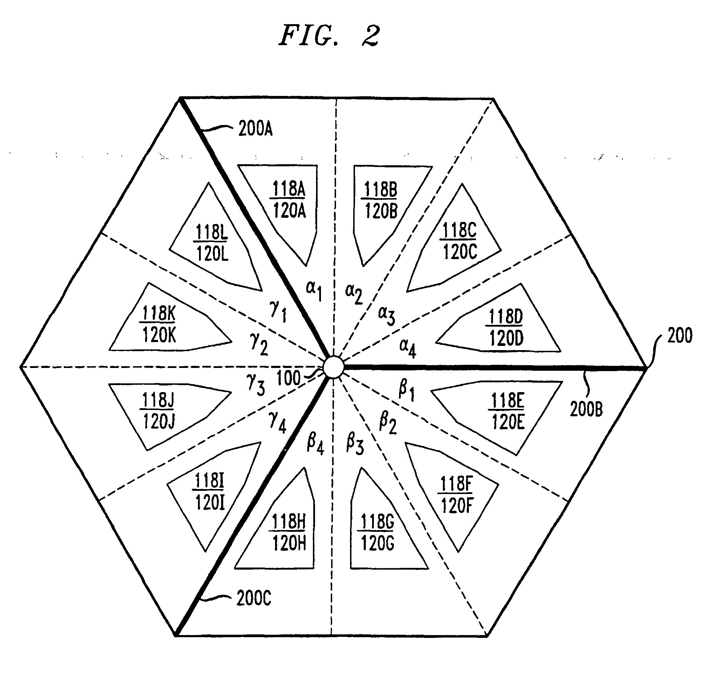

The control signal on path 124 causes switch matrix 108 to couple or uncouple (i.e., disconnect) one or more of the amplifiers (and corresponding antenna) to or from a radio. Therefore, an amplifier (and corresponding antenna) will be coupled or uncoupled to or from a particular radio based on the transmission power levels of that amplifier or other amplifiers and a defined transmission power threshold. In this manner, amplifiers can be automatically allocated to particular radios serving certain sectors or sub-sectors based on power demands (or capacity demands) of the different groups of equipment vis-a-vis each other. In sum, automatic allocation refers to the generation of a control signal that causes provided equipment serving one portion of the communication system to serve another portion of the communication system. For illustrative purposes only, the operation of the system and method of the present invention will be explained in the context of the cellular configuration depicted in FIG. 2.

Referring now to FIG. 2, there is shown one cell (200) that is part of an overall cellular wireless communication system. The antenna system 100 of the present invention is located at or near the center of the cell. It is noted that the cell is shown as being hexagonal in shape for illustrative purposes only; the actual cell area may be of any shape. Cell 200 is divided into three equal sectors, viz., Sector α, Sector β and Sector γ, each having an angle of 120°. Sector α is bounded by demarcations 200A and 200B. Sector β is bounded by demarcations 200C and 200B and Sector γ is bounded by demarcations 200A and 200C. Each sector is further divided into four 30° sub-sectors. Thus, Sector α comprises sub-sectors α₁, α₂, α₃ and α₄; Sector β comprises sub-sectors β₁, β₂, β₃ and β₄; Sector γ comprises sub-sectors γ₁, γ₂, γ₃ and γ₄.

Each group is assigned to a particular sector; thus, the first group is assigned to sector α and, in particular, amplifier 118A and antenna element 120A are assigned to sub-sector α₁. Amplifier 118B and antenna element 120B are assigned to sub-sector α₂. Amplifier 118C and antenna element 120C are assigned to sub-sector α₃. Amplifier 118D and antenna element 120D are assigned to sub-sector α₄. The second and third groups are similarly assigned to sectors β and γ respectively. In particular, amplifier 118E and antenna element 120E are assigned to sub-sector β₁; amplifier 118F and antenna element 120F are assigned to sub-sector β₂; amplifier 118G and antenna element 120G are assigned to sub-sector β₃; amplifier 118H and antenna element 120H are assigned to sub-sector β₄. For the third group, amplifier 118I and antenna element 120I are assigned to sub-sector γ₁; amplifier 118J and antenna element 120J are assigned to sub-sector γ₂; amplifier 118K and antenna element 120K are assigned to sub-sector γ₃; amplifier 118L and antenna element 18L are assigned to sub-sector γ₄.

The antenna elements and amplifiers assigned to particular sub-sectors, serve the users located in those sectors. Further, the antenna elements and amplifiers assigned to particular sub-sectors are limited to a certain amount of power that is directly related to the capacity of the sub-sector. The amount of power to which such equipment are limited determines the aggregate amount of information that such equipment can convey. A particular set of equipment may be reaching its limit because of relatively few users conveying a relatively large amount of information or many users each conveying small amounts of information. Regardless of the make up of the active user population in a particular sub-sector, the equipment assigned to such a sub-sector has to meet the capacity demands of that sub-sector. A service provider can arbitrarily set a power threshold (e.g., transmission power threshold or any other well known capacity related threshold) above which it will not allow its equipment to operate.

When the transmission power level of the group serving a particular sub-sector reaches the set power threshold, the antenna system and method of the present invention switches part of that group to another sector that can still operate within its threshold limit even with the added new equipment. For example, suppose a transmission power threshold is set for each of the sectors depicted in FIG. 2. Suppose further that sector α is operating at or near its capacity; this will be manifested by the aggregate power transmitted by equipment in the first group (i.e., amplifiers 118A-118D and antenna elements 120A-120D) being at or near the transmission power threshold set for that group. Referring to FIG. 1, the aggregate transmission power for sector α is detected by controller 110 of antenna system 100 which compares it to the transmission power threshold set for the first group. The controller then decides, based on criteria set by the service provider or the manufacturer of the antenna system, whether the aggregate transmission power level warrants switching some of the equipment from sector a to another sector in order to lessen the capacity demands on the equipment serving sector α. Controller 110 will then determine the aggregate power of the other groups and further determine whether any of the other groups can still operate below their set power threshold even after some of the equipment (i.e., members) from the first group is switched to one or more of these other groups. Controller 110 makes these determinations by comparing the aggregate power of the groups with the power threshold established for the groups. Controller 110 will then select one of those groups which can still operate within its threshold even after having additional equipment is switched to it.

In sum, controller 110 generates the control signal causing equipment to be switched between portions of the communication system to meet the capacity demands of the various portions. For example, equipment is automatically transferred (or allocated) from one portion to another portion to meet the capacity demands of one or both portions. Controller 110 first determines the capacity demands of the portion of the communication system to which equipment is to be switched. Controller 110 causes the equipment to be switched when the capacity demand of the portion is calculated (or determined) to be below an established capacity threshold (e.g. power level, number of subscribers, amount of information) even after the equipment has been switched.

The equipment (from the first group) to be switched to the another group can be selected by controller 110 based on a variety of criteria. For example, controller 110 can select the equipment serving a sector that has the highest capacity demand in the first group and switch those equipment to another group. Controller 110 can also select several members of the first group and switch those equipment to another group. Regardless, of what criterion is used by controller 110, it switches certain equipment from the first group until the aggregate power transmitted by the remaining equipment of the first group operates below the set power threshold for the first group and the group to which the switched equipment is added also operates below its established power threshold.

Alternatively, a power threshold can be established for each member in a group of equipment instead of a threshold for the overall group of equipment. In such a case, controller 110 will compare the power transmitted by a member of the group to the power threshold established for that member. Controller 110 will switch equipment from the group to another group until each member of the remaining group operates at a power level below the threshold set for that member.

Continuing with our example, controller 110 has determined that the second group of equipment (serving sector β) can still operate below its threshold even after amplifier 118D and antenna element 120D are switched to it. Controller 110 generates a control signal onto path 124 causing switch 108 to uncouple amplifier 118D and antenna element 120D from radio 102. Amplifier 118D and antenna element 120D are now coupled to radio 104 which is serving sector β. Thus, sector β has in effect been expanded to include a fifth sub-sector. The control signal on path 124 causes signals heretofore originating from radio 102 and transmitted through amplifier 118D and antenna element 120D to now originate from radio 104. Controller 110 can continue to switch equipment from one group to another group to allow each group to operate below its capacity threshold.

The system of the present invention is not limited to any particular implementation. Antenna array 120 can also be implemented as a group of antennas each of which is coupled to an output of an amplifier. Controller 110 can be implemented with a microprocessor and control circuitry or as a digital signal processor. Radios 102, 104 and 106 are implemented as analog/digital radio circuitry, or other well known radio circuitry typically used in wireless or wireline communication systems. Switch matrix 108 can be implemented as any well known digital and/or analog switch matrices for routing radio signals.

## Claims

1. A dynamic beam on demand system comprising:
at least one radio (102, 104, 106);
a plurality of amplifiers (118A-118L) each having an input switchably coupled with the at least one radio by means of a switch matrix (108) and with at least one beam former (112, 114, 116), each amplifier having at least one output coupled to an antenna array (120); and
a controller (110) for generating a control signal to the switch matrix for causing the switch matrix to couple or uncouple an amplifier to the at least one radio,
**CHARACTERIZED IN THAT**
the controller is connected to receive an output transmission power level signal from each of the plurality of amplifiers, and said control signal is based on the received output transmission power level of the amplifier and a threshold transmission power.

2. The dynamic beam on demand system of claim 1 wherein the controller couples or uncouples an amplifier from the at least one radio based on whether the received transmission power of the amplifier is above or below the threshold transmission power.

3. The dynamic beam on demand system of claim 1 wherein the amplifier and a corresponding antenna element of the antenna array are coupled or uncoupled to or from the at least one radio.

4. The dynamic beam on demand system of claim 1 wherein the control signal is based on the transmission power level of a group of which the amplifier is a member and a threshold transmission power level established for the group.

5. The dynamic beam on demand system of claim 1 wherein the control signal is based on the transmission power level of the amplifier and a threshold transmission power established for the amplifier.

6. The dynamic beam on demand system of claim 1 wherein the threshold is calculated by the controller and the threshold is based on the total average transmission power of a set of amplifiers from the plurality of amplifiers.

7. The dynamic beam on demand system of claim 1 wherein the at least one radio is switchably coupled to a set of amplifiers from the plurality of amplifiers and an amplifier is either removed from the set or added to the set based on the threshold transmission power of the set and the transmission power of the amplifier to be added or removed.

8. The dynamic beam on demand system of claim 1 wherein each amplifier output is coupled to an antenna element of the antenna array.

9. The dynamic beam on demand system of claim 1 wherein the switch matrix has N inputs and M outputs wherein N and M are integers equal to 1 or greater and M is greater than N.

10. The dynamic beam on demand system of claim 1 wherein such a system serves a cell that is part of a wireless communication system.

## Patentansprüche

1. Dynamisches System zur Strahlbildung nach Bedarf, mit folgendem:
mindestens einem Funkgerät (102, 104, 106);
mehreren Verstärkern (118A-118L) jeweils mit einem schaltbar an das mindestens eine Funkgerät mittels einer Schaltmatrix (108) angekoppelten Eingang und mindestens einem Strahlbildner (12, 114, 116), wobei an jedem Verstärker mindestens ein Ausgang an eine Antennengruppe (120) angekoppelt ist; und
einer Steuerung (110) zum Erzeugen eines Steuersignals zur Schaltmatrix zum Bewirken, daß die Schaltmatrix einen Verstärker an das mindestens eine Funkgerät ankoppelt oder von ihm entkoppelt,
**dadurch gekennzeichnet, daß** die Steuerung so verbunden ist, daß sie von jedem der mehreren Verstärker ein Ausgangs-Sendeleistungspegelsignal empfängt und das Steuersignal auf dem empfangenen Ausgangs-Sendeleistungspegel des Verstärkers und einer Schwellwertsendeleistung beruht.

2. Dynamisches System zur Strahlbildung nach Bedarf nach Anspruch 1, wobei die Steuerung einen Verstärker von dem mindestens einen Funkgerät entkoppelt oder an dieses ankoppelt auf Grundlage dessen, ob die empfangene Sendeleistung des Verstärkers über oder unter der Schwellen-Sendeleistung liegt.

3. Dynamisches System zur Strahlbildung nach Bedarf nach Anspruch 1, wobei der Verstärker und ein entsprechendes Antennenelement der Antennengruppe an das mindestens eine Funkgerät angekoppelt oder von ihm entkoppelt werden.

4. Dynamisches System zur Strahlbildung nach Bedarf nach Anspruch 1, wobei das Steuersignal auf dem Sendeleistungspegel einer Gruppe beruht, von der der Verstärker ein Mitglied ist, und einem für die Gruppe festgelegten Schwellen-Sendeleistungspegel.

5. Dynamisches System zur Strahlbildung nach Bedarf nach Anspruch 1, wobei das Steuersignal auf dem Sendeleistungspegel des Verstärkers und einer für den Verstärker festgelegten Schwellensendeleistung beruht.

6. Dynamisches System zur Strahlbildung nach Bedarf nach Anspruch 1, wobei der Schwellwert durch die Steuerung berechnet wird und der Schwellwert auf der Gesamt-Durchschnittssendeleistung eines Satzes von Verstärkern aus der Mehrzahl von Verstärkern beruht.

7. Dynamisches System zur Strahlbildung nach Bedarf nach Anspruch 1, wobei das mindestens eine Funkgerät schaltbar an einen Satz von Verstärkern aus der Mehrzahl von Verstärkern angekoppelt ist und auf Grundlage der Schwellensendeleistung des Satzes und der Sendeleistung des hinzugefügten oder zu entfernenden Verstärkers entweder aus dem Satz entfernt oder dem Satz hinzugefügt wird.

8. Dynamisches System zur Strahlbildung nach Bedarf nach Anspruch 1, wobei jeder Verstärkerausgang an ein Antennenelement der Antennengruppe angekoppelt ist.

9. Dynamisches System zur Strahlbildung nach Bedarf nach Anspruch 1, wobei die Schaltmatrix N Eingänge und M Ausgänge aufweist, wobei N und M Ganzzahlen gleich 1 oder größer sind und M größer als N ist.

10. Dynamisches System zur Strahlbildung nach Bedarf nach Anspruch 1, wobei ein solches System eine Zelle versorgt, die Teil eines Funkkommunikationssystems ist.

## Revendications

1. Système de faisceau dynamique à la demande comprenant :
au moins une radio (102, 104, 106) ;
une pluralité d'amplificateurs (118A à 118L) ayant chacun une entrée couplée de façon commutable à l'au moins une radio au moyen d'une matrice de commutation (108) et comportant au moins un formateur de faisceau (112, 114, 116), chaque amplificateur ayant au moins une sortie couplée à un réseau d'antennes (120) ; et
un contrôleur (110) pour générer un signal de commande de la matrice de commutation pour faire en sorte que la matrice de commutation couple un amplificateur à l'au moins une radio ou l'en découple,
**CARACTERISE EN CE QUE**
le contrôleur est connecté pour recevoir un signal de niveau de puissance d'émission de sortie depuis chacun de la pluralité d'amplificateurs, et ledit signal de commande est basé sur le niveau de puissance d'émission de sortie reçu de l'amplificateur et une puissance d'émission de seuil.

2. Système de faisceau dynamique à la demande selon la revendication 1, dans lequel le contrôleur couple un amplificateur à l'au moins une radio ou l'en découple selon que le niveau de la puissance d'émission reçue est supérieur ou inférieur à la puissance d'émission de seuil.

3. Système de faisceau dynamique à la demande selon la revendication 1, dans lequel l'amplificateur et un élément d'antenne correspondant du réseau d'antennes sont couplés à l'au moins une radio ou en sont découplés.

4. Système de faisceau dynamique à la demande selon la revendication 1, dans lequel le signal de commande est basé sur le niveau de puissance d'émission d'un groupe dont l'amplificateur fait partie et un niveau de puissance d'émission de seuil établi pour le groupe.

5. Système de faisceau dynamique à la demande selon la revendication 1, dans lequel le signal de commande est basé sur le niveau de puissance d'émission de l'amplificateur et un niveau de puissance d'émission de seuil établi pour l'amplificateur.

6. Système de faisceau dynamique à la demande selon la revendication 1, dans lequel le seuil est calculé par le contrôleur et le seuil est basé sur la puissance d'émission moyenne totale d'un ensemble d'amplificateurs parmi la pluralité d'amplificateurs.

7. Système de faisceau dynamique à la demande selon la revendication 1, dans lequel l'au moins une radio est couplée de façon commutable à un ensemble d'amplificateurs parmi la pluralité d'amplificateurs et un amplificateur est soit retiré de l'ensemble, soit ajouté à l'ensemble en fonction de la puissance d'amission de seuil de l'ensemble et de la puissance d'émission de l'amplificateur à ajouter ou à retirer.

8. Système de faisceau dynamique à la demande selon la revendication 1, dans lequel chaque sortie d'amplificateur est couplée à un élément d'antenne du réseau d'antennes.

9. Système de faisceau dynamique à la demande selon la revendication 1, dans lequel la matrice de commutation a N entrées et M sorties, où N et M sont des nombres entiers égaux à 1 ou plus et M est supérieur à N.

10. Système de faisceau dynamique à la demande selon la revendication 1, dans lequel un tel système dessert une cellule qui fait partie d'un système de communication sans fil.
